# EUROPÄISCHE PATENTSCHRIFT

(11) **EP 2 050 781 B1**
(45) Veröffentlichungstag und Bekanntmachung des Hinweises auf die Patenterteilung: **21.12.2011**
(21) Anmeldenummer: 08017542.5
(22) Anmeldetag: 07.10.2008
(51) Int. Cl.: C08K 3/00

(54) **Flammfester Werkstoff auf der Basis von mit Flammschutzmittels versetzten Polymeren, Polymer-Formteil aus einem solchen Werkstoff und Verfahren zu dessen Herstellung**
Flame-proof material based on polymers implanted with flame protection material, polymer moulded part made of such a material and method of its manufacture
Matière active ignifuge à base de polymères revêtus de produit ignifuge, pièce de formage polymère composée d'une telle matière active et son procédé de fabrication

(30) Priorität: 19.10.2007 DE 102007050327
(43) Veröffentlichungstag der Anmeldung: 22.04.2009
(73) Patentinhaber: EBCO Schäumtechnik GmbH & Co. KG, 79774 Albbruck (DE)
(72) Erfinder: Hanspeter Ebner, 79804 Dogern (DE)
(74) Vertreter: Lenz, Steffen

(56) Entgegenhaltungen:
- WO-A-2004/044049
- DE-A1-102004 050 478
- DE-A1-102004 050 479
- DATABASE WPI Week 200471 Thomson Scientific, London, GB; AN 2004-721507 XP002509756 & JP 2004 281057 A (FURUKAWA ELECTRIC CO LTD) 7. Oktober 2004 (2004-10-07)
- DATABASE WPI Week 200367 Thomson Scientific, London, GB; AN 2003-699997 XP002509757 & JP 2003 025516 A (HIRAOKA SHOKUSEN KK) 29. Januar 2003 (2003-01-29)

## Beschreibung

Die Erfindung betrifft einen flammfesten Werkstoff mit einer mit wenigstens einem Flammschutzmittel in Form von Ammoniumpolyphosphat und/oder rotem Phosphor versetzten Polymermatrix. Sie ist ferner auf ein Polymer-Formteil mit einem solchen flammfesten Werkstoff sowie auf ein Verfahren zu dessen Herstellung gerichtet.

In vielen Fällen besteht ein Bedarf, Werkstoffen auf der Basis von Polymeren, seien es thermoplastische oder thermoelastische Polymere oder seien es duroplastische oder elastische Polymere, eine erhöhte Flammfestigkeit zu verleihen, um solchen Werkstoffen die Möglichkeit zu eröffnen, auch für Anwendungszwecke eingesetzt zu werden, bei welchen die Gefahr eines Ausbruchs von Feuer besteht und welche daher aus Sicherheitsgründen andernfalls einen Einsatz von Polymeren, welche aufgrund ihrer chemischen Natur in aller Regel relativ leicht entflammbar sind, verbieten. Beispielhaft sei in diesem Zusammenhang auf die Gebiete des Transportwesens (wie Innenverkleidungsteile von Flugzeugen oder Kraftfahrzeugen), des Bauwesens oder auf den Elektroniksektor verwiesen, wobei die verwendeten Werkstoffe insbesondere bei Flug- und Fahrzeugen im - häufig mit dem Ausbrechen von Feuer einhergehenden - Unglücksfall den Flammen möglichst lange standhalten müssen, um den Insassen möglichst viel Zeit zu bieten, das Flug- oder Fahrzeug zu verlassen.

Neben einer Vielzahl an verschiedenen anderen Flammschutzmitteln haben sich hierfür insbesondere solche auf der Basis von Ammoniumpolyphosphat und/oder rotem Phosphor bewährt. Die flammhemmende Wirkung von Ammoniumpolyphosphat und rotem Phosphor beruht auf einem Intumeszenzeffekt, d.h. es wird eine isolierende Schutzschicht auf dem zu schützenden Werkstoff aufgebaut, die einen Zutritt von Sauerstoff und Wärme weitgehend verhindert. Im Falle von rotem Phosphor, welcher insbesondere auch in mikroverkapselter Form eingesetzt werden kann, wird eine aufquellende Schicht aus Phosphorsäuren und Polyphosphorsäuren auf der Materialoberfläche gebildet, wobei roter Phosphor darüber hinaus als Radikalfänger in der Gasphase wirken kann. Ammoniumpolyphosphat, dessen Wirksamkeit durch einen Zusatz von Metallhydraten, wie Aluminiumtrihydrat, noch verbessert werden kann, bildet einen Schaum auf der Materialoberfläche, welcher diese ebenfalls sowohl vor Sauerstoffzutritt als auch vor Wärme schützt. Der Vorteil der genannten Flammschutzmittel liegt neben ihrer hohen Wirksamkeit insbesondere darin, daß die keine Halogene enthalten und somit eine Bildung von toxischen halogenierten Rauchgasen verhindert wird. Ferner sorgen diese Flammschutzmittel für eine verhältnismäßig geringe Rauchgasdichte und sind für den Einsatz sowohl in thermoplastischen Polymeren, wie Polypropylen (PP), Polyethylen (PE), Ethylen-Vinylacetat-Copolymere (EVA) etc., als auch in duroplastischen Polymeren, wie Polyurethanen etc., bei welchen sie den flüssigen Harzen zugesetzt werden, geeignet.

Indes hat sich gezeigt, daß die Anforderungen an die Rauchgasdichte gemäß gegenwärtig geltenden Normen für den Flugverkehr, wie insbesondere der Normen FAR 25.853 (d) sowie ABD 0031, auch mit den vorstehend erwähnten Flammschutzmitteln nicht erreicht werden können, was bedeutet, daß Polymer-Formteile, wie sie in Flugzeugen z.B. für Sitzschalen, Armlehnen, Fachungen, Abdeckklappen etc. verbreitet eingesetzt werden, nur unter Inkaufnahme eines Verfehlens der vorgenannten Normen überhaupt eingesetzt werden können.

Die DE 10 2004 050 479 A1 beschreibt eine Formmasse zur Herstellung schwer entflammbarer Gegenstände, welche aus einer thermoplastischen Polymermatrix besteht, die mit einem lichtsensitiven Pigment versetzt ist. Als mögliche polymere Matrixmaterialien der Formmasse sind die üblichen großtechnischen Vertreter von duroplastischen und thermoplastischen Polymeren erwähnt, unter anderem auch allgemein thermoplastische Polyurethane. Als Flammschutzmittel kann die Formmasse neben einer Vielzahl an anderen Phosphorverbindungen auch Ammoniumpolyphosphat enthalten. Eine ähnliche Formmasse ist der DE 10 2004 050 478 A1 zu entnehmen.

In der WO 2004/044049 A2 geht es um einen weiteren flammfesten Kunststoff-Werkstoff auf der Basis von thermoplastischen oder duroplastischen Polymeren, für welchen als Flammschutzmittel neben einer Vielzahl an anderen Flammschutzmitteln, darunter auch solchen auf der Basis von Phosphor, aktivierte Ammoniumpolyphosphate erwähnt sind. Als Matrixpolymere des Kunststoff-Werkstoffes sind wiederum praktisch sämtliche bekannte Polymere mit großtechnischer Relevanz offenbart. Sofern Polyurethane erwähnt sind, ist ausschließlich der Einsatz von duroplastischen Polyurethanen vorgesehen.

Die JP 2004-281 057 A beschreibt einen als mehrschichtiges Beschichtungsmaterial für Kabel vorgesehenen, flammfesten Kunststoff-Werkstoff, welcher aus einem Polybutylenterephthalatharz mit einem Flammschutzmittel besteht. Ferner wird ein Formteil aus einem solchen Kunststoff-Werkstoff erörtert. Als Flammschutzmittel ist insbesondere Ammoniumpolyphosphat erwähnt. Die Druckschrift sieht insbesondere vor, daß eine äußere Lage des zu umhüllenden Kabels aus einem Triazinderivat, insbesondere Melamincyanurat, welches ein Harz mit einem Block-Copolymer auf der Basis eines Polyesters enthält, sowie einem thermoplastischen Polyurethan gebildet ist. Als Beispiel für die innere Schicht der Kabelbeschichtung wird ein Blend aus einer Vielzahl an Polymeren, wie silanierten Melamincyanuraten, Trimethacrylaten, Propionaten, Stearaten etc. genannt, welcher unter anderem einerseits ein thermoplastisches Elastomer auf der Basis eines Esters, andererseits ein thermoplastisches Polyurethan enthält. Die äußere Schicht soll einerseits aus einem Ethylenvinylacetat-Copolymer mit Methacrylaten, Propionaten und Stearaten gebildet sein.

Der JP 2003-699 997 A ist schließlich ein mehrschichtiges Textillaminat zu entnehmen, welches zur Imprägnierung mit einer Harzschicht getränkt worden ist. Die Harzschicht enthält ein Polyurethanharz, ein Acryl-Copolymerharz sowie ein thermoplastisches Harz, welches ein Vinylacetat-Copolymerharz enthält. Das gesamte Laminat kann hierbei aus 30 bis 90 Mass.-% Polyurethanharz bezogen auf die Harzmischung gebildet sein, wobei insbesondere eine Mischung aus einem Polyurethanharz und einem Vinylacetat-Copolymerharz angegeben ist, welches unter anderem Ammoniumpolyphosphat enthält.

Der Erfindung liegt daher die Aufgabe zugrunde, einen flammfesten Polymer-Werkstoff der eingangs genannten Art dahingehend weiterzubilden, daß nicht nur eine hinreichende Flammfestigkeit, sondern auch eine verminderte Rauchgasentwicklung beim Entzünden sichergestellt ist, welche insbesondere den Anforderungen an Luftfahrzeuge gemäß den Normen FAR 25.853 (d) und ABD 0031 genügt.

Erfindungsgemäß wird diese Aufgabe bei einem flammfesten Polymer-Werkstoff der eingangs genannten Art dadurch gelöst, daß die Polymermatrix des Werkstoffes überwiegend aus einem thermoplastischen Polyurethan auf der Basis von aromatischen Polyestern gebildet ist.

Überraschenderweise wurde gefunden, daß im Falle eines Einsatzes der erfindungsgemäßen thermoplastischen Polyurethanen (TPU) auf der Basis von aromatischen Polyestern in Verbindung mit den als solchen bekannten Flammschutzmitteln auf der Basis von Ammoniumpolyphosphat, gegebenenfalls in Verbindung mit Aluminiumtrihydrat, und/oder rotem Phosphor, gegebenenfalls in mikroverkapselter Form, die Anforderungen an die Rauchgasdichte gemäß den vorgenannten Normen als erster Werkstoff auf Polymerbasis überhaupt erfüllt werden können, was bislang nicht möglich war, so daß der erfindungsgemäße Werkstoff problemlos für Flugzeuginnenverkleidungsteile, aber selbstverständlich auch für sämtliche anderen Anwendungsgebiete, bei welchen größtmögliche Anforderungen an einen Brandschutz gestellt werden, eingesetzt werden kann. Die Entflammbarkeit entspricht dabei weitgehend derjenigen von gegenwärtig in der Flugzeugindustrie eingesetzten Polymer-Werkstoffen, bei welchen sich üblicherweise um vornehmlich duroplastische Polyurethane handelt, deren flüssigen Harze die Flammschutzmittel vor der Polymerisations- bzw. Vernetzungsreaktion zugesetzt werden.

Während mit dem Begriff "überwiegend" gemeint ist, daß die Polymermatrix des erfindungsgemäßen Werkstoffes zu wenigstens 50 Mass.-% aus dem thermoplastischen Polyurethan auf der Basis aromatischer Polyester besteht, ist gemäß einer bevorzugten Ausführung vorgesehen, daß der Anteil dieses thermoplastischen Polyurethans wenigstens 80 Mass.-%, insbesondere wenigstens 90 Mass.-%, vorzugsweise wenigstens 95 Mass.-%, bezogen auf die gesamte Polymermatrix des Werkstoffes beträgt, wobei die Polymermatrix des erfindungsgemäßen Werkstoffes höchst vorzugsweise auch im wesentlichen gänzlich, d.h. - abgesehen von gegebenenfalls vorhandenen Additiven, wie Pigmenten und Farbstoffen, Weichmachern, Gleitmitteln, Antioxidantien etc. - zu etwa 100 Mass.-% aus dem thermoplastischen Polyurethan auf der Basis von aromatischen Polyestern gebildet sein kann.

In weiterhin bevorzugter Ausführung ist vorgesehen, daß das thermoplastische Polyurethan auf der Basis von aromatischen Polyestern von einem sowohl spritzgießbaren als auch extrudierbaren thermoplastischen Polyurethan gebildet ist, um für eine einfache und kostengünstige Verarbeitbarkeit bei einer einwandfreien Mischbarkeit mit den erfindungsgemäß vorgesehenen Flammschutzmitteln zu sorgen.

Dabei hat sich beispielsweise ein thermoplastisches Polyurethan auf der Basis von aromatischen Polyestern als vorteilhaft erwiesen, wie es unter dem Handelsnamen "Texin^{®}", insbesondere "Texin^{®} 285", der *Bayer AG* erhältlich ist, wobei die Eigenschaften der Rauchgasentwicklung eines solchen Polymers in Verbindung mit Ammoniumpolyphosphat als Flammschutzmittel weiter unten anhand eines Ausführungsbeispiels näher erläutert sind.

Darüber hinaus wurde gefunden, daß im Falle des Einsatzes eines erfindungsgemäßen thermoplastischen Polyurethans auf der Basis aromatischer Polyester ein Anteil des Flammschutzmittels zwischen etwa 10 und etwa 30 Mass.-%, insbesondere zwischen etwa 15 und etwa 25 Mass.-%, bezogen auf den gesamten Werkstoff, ausreicht, um für die geforderten Eigenschaften sowohl hinsichtlich Flammschutz als auch hinsichtlich Rauchgasentwicklung zu sorgen, während bei herkömmlichen in der Flugzeugindustrie eingesetzten Polymer-Werkstoffen auf Polyurethanbasis dieselben Flammschutzmittel mit einem Anteil zwischen 30 und 40 Mass.-% zugesetzt werden müssen, um zumindest einen hinreichenden Flammschutz sicherzustellen.

Das Flammschutzmittel selbst, welches - wie oben erwähnt - als solches bekannt ist und in Verbindung mit verschiedenen Polymer-Werkstoffen bereits Verwendung findet, kann vorzugsweise aus der Gruppe der unter dem Handelsnamen "Exolit^{®}", insbesondere "Exolit^{®} AP" (auf Ammoniumpolyphosphatbasis) und/oder "Exolit^{®} RP" (auf Basis roten Phosphors), erhältlichen Flammschutzmittel der *Clariant AG* ausgewählt sein.

Die Erfindung betrifft auch ein flammfestes Polymer-Formteil, welches dadurch gekennzeichnet, daß es einen Werkstoff der vorgenannten Art enthält oder im wesentlichen gänzlich hieraus besteht. Das erfindungsgemäße Polymer-Formteil kann dabei im erstgenannten Fall einen, insbesondere im wesentlichen sandwichartigen, mehrschichtigen Aufbau aufweisen, wobei wenigstens eine der Schichten von einem Werkstoff der vorgenannten gebildet ist.

Das erfindungsgemäße Polymer-Formteil kann beispielsweise ein Innenverkleidungsteil für Flugzeuge und/oder Kraftfahrzeuge sein, wobei es sich selbstverständlich auch für beliebige andere Anwendungsgebiete anbietet, bei welchen neben einer geringen Entflammbarkeit eine geringe Rauchgasentwicklung gefordert wird, wir z.B. für Gehäuse oder andere Teile elektrischer oder elektronischer Geräte, Wohn-, Geschäfts- oder Industriegebäuden mit hohen Anforderungen an den Brandschutz usw.

Ein Verfahren zur Herstellung eines solchen Polymer-Formteils zeichnet sich dadurch aus, daß ein Werkstoff in Form des erfindungsgemäßen thermoplastischen Polyurethans auf der Basis von aromatischen Polyestern mit einem Flammschutzmittel auf der Basis von Ammoniumpolyphosphat und/oder rotem Phosphor, z.B. in Pulver- oder Granulatform, plastifiziert und mittels bekannter thermoplastischer Verarbeitungsverfahren, insbesondere Extrudieren oder Spritzgießen, zu dem Formteil geformt wird. Das Polymer kann dabei bereits mit den Flammschutzmitteln vorgemischt sein, oder letztere werden dem noch festen oder insbesondere dem, z.B. in einem Extruder, plastifizierten Polymer zugesetzt und möglichst homogen in dieses eingemischt.

Nachstehend ist die Erfindung anhand eines die Erfindung nicht einschränkenden Ausführungsbeispiels zum Zwecke der besseren Veranschaulichung näher erläutert.

### Ausführungsbeispiel:

Es wurden mehrere Probekörper einer für Armlehnen in Flugzeugen vorgesehenen Ausführungsform eines erfindungsgemäßen Polymer-Werkstoffes mit der folgenden Zusammensetzung erstellt:
- 83 Mass.-% Thermoplastisches Polyurethan auf der Basis von aromatischen Polyestern " Texin^{®} 285" (*Bayer AG*); und
- 17 Mass.-% Flammschutzmittel auf der Basis von Ammoniumpolyphosphat "Exolit^{®} AP 750" (*Clariant AG*).

Gemäß FAR 25.853 (d) und ABD 0031 wurden jeweils drei Probekörper in einer Kammer zur optischen Messung der Rauchgasdichte einerseits unter Luftabschluß ("non flaming (NF)"), andererseits unter Atmosphärenbedingungen ("flaming (F)") entflammt und wurde die Rauchgasdichte durch Messung der Transmission einer die Meßkammer durchsetzenden Lichtmeßstrecke gemessen. Gemäß den genannten Normen muß nach 4 min nach dem Beflammen der Probe die derart gemessene spezifische optische Dichte Ds in der Kammer kleiner als 200 sein. In den nachfolgenden Tabellen 1 (non flaming, NF) und 2 (flaming, F) sind die erhaltenen Werte der optischen Dichte Ds wiedergegeben.

**Tabelle 1: TPU, non flaming (NF).**

| | Optische Dichte Ds nach: | | | | | | Bestanden? | |
|---|---|---|---|---|---|---|---|---|
| Proben-Nr. | 1 min | 2 min | 3 min | 4 min | 5 min | 6 min | FAR | ABD |
| 1 | 0 | 9 | 22 | 31 | 37 | 50 | ja | ja |
| 2 | 0 | 16 | 39 | 51 | 57 | 70 | ja | ja |
| 3 | 0 | 22 | 37 | 48 | 55 | 65 | ja | ja |
| Maximalwert | 0 | 22 | 39 | 51 | 57 | 70 | | |
| Mittelwert | 0 | 16 | 33 | 43 | 50 | 62 | | |

**Tabelle 2: TPU, flaming (F).**

| | Optische Dichte Ds nach: | | | | | | Bestanden? | |
|---|---|---|---|---|---|---|---|---|
| Proben-Nr. | 1 min | 2 min | 3 min | 4 min | 5 min | 6 min | FAR | ABD |
| 1 | 11 | 45 | 66 | 87 | 103 | 121 | ja | ja |
| 2 | 6 | 31 | 50 | 101 | 130 | 151 | ja | ja |
| 3 | 11 | 47 | 75 | 93 | 101 | 107 | ja | ja |
| Maximalwert | 11 | 47 | 75 | 101 | 130 | 151 | | |
| Mittelwert | 9 | 41 | 64 | 94 | 111 | 126 | | |

Darüber hinaus wurde die Brennbarkeit von jeweils fünf Proben bei einer Beflammungszeit von 12 s (Vertikaltests) gemäß ABD 0031 und FAR 25.853 b(4) ermittelt, wobei bei den fünf Proben eine Gesamtbrennzeit von 20, 16, 18, 17 und 16 s (Mittelwert: 17,4 s) ermittelt wurde, was einer Nachbrennzeit, die gemäß den vorgenannten Normen kleiner als 15 s betragen muß, von 8, 4, 6, 5 und 4 s (Mittelwert: 5,4 s) entspricht.

Toxizitätstests an jeweils 3 Proben gemäß ABD 0031 anhand der Parameter Blausäure (HCN), Kohlenmonoxid (CO), Stickoxide (NO und NO₂), Schwefelverbindungen (SO₂ und H₂S), Fluorwasserstoff (HF) und Chlorwasserstoff (HCl) ergaben Mittelwerte von (1) "non flaming (NF)": 0 ppm (SO₂ und H₂S; HF; HCl), 2 ppm (HCN; NO und NO₂) sowie 10 ppm (CO); bzw. (2) "flaming (NF)": 0 ppm (SO₂ und H₂S; HF; HCl), 5 ppm (HCN); 15 ppm (NO und NO₂) sowie 150 ppm (CO), was den Anforderungen an die genannte Norm ebenfalls problemlos genügt.

### Vergleichsbeispiel:

Es wurden mehrere Probekörper mit identischen geometrischen Abmessungen eines für Armlehnen in Flugzeugen bereits eingesetzten Polymer-Werkstoffes mit der folgenden Zusammensetzung erstellt:
- Polyurethanschaum aus einem Harzsystem mit 42 Mass.-% Polyetherpolyol, 5 Mass.-% Vernetzungsmittel, 2 Mass.-% Stabilisator, 1 Mass.-% Katalysator, 5 Mass.-% Pigmente und 5 Mass.-% Treibmittel sowie Diphenylmethandiisocyanat im Verhältnis 24:100 bezogen auf das Polyetherpolyol; und
- 35 Mass.-% Flammschutzmittel auf der Basis von Ammoniumpolyphosphat "Exolit^{®} AP 750" (*Clariant AG*) in der Polyetherpolyolkomponente.

Gemäß FAR 25.853 (d) und ABD 0031 wurden wiederum jeweils drei Probekörper in derselben Kammer zur optischen Messung der Rauchgasdichte einerseits unter Luftabschluß ("non flaming (NF)"), andererseits unter Atmosphärenbedingungen ("flaming (F)") entflammt und wurde die Rauchgasdichte durch entsprechende Messung der Transmission einer die Meßkammer durchsetzenden Lichtmeßstrecke gemessen. Wie bereits erwähnt, muß gemäß den genannten Normen nach 4 min nach dem Beflammen der Probe die derart gemessene spezifische optische Dichte Ds in der Kammer kleiner als 200 sein. In den nachfolgenden Tabellen 3 (non flaming, NF) und 4 (flaming, F) sind die erhaltenen Werte der optischen Dichte Ds wiedergegeben.

**Tabelle 3: PUR, non flaming (NF).**

| | Optische Dichte Ds nach: | | | | | | Bestanden? | |
|---|---|---|---|---|---|---|---|---|
| Proben-Nr. | 1 min | 2 min | 3 min | 4 min | 5 min | 6 min | FAR | ABD |
| 1 | 8 | 71 | 177 | 260 | 334 | 393 | nein | nein |
| 2 | 8 | 57 | 132 | 255 | 336 | 386 | nein | nein |
| 3 | 7 | 60 | 144 | 247 | 305 | 373 | nein | nein |
| Maximalwert | 8 | 71 | 177 | 260 | 336 | 393 | | |
| Mittelwert | 8 | 63 | 151 | 254 | 325 | 384 | | |

**Tabelle 4: PUR, flaming (F).**

| | Optische Dichte Ds nach: | | | | | | Bestanden? | |
|---|---|---|---|---|---|---|---|---|
| Proben-Nr. | 1 min | 2 min | 3 min | 4 min | 5 min | 6 min | FAR | ABD |
| 1 | 13 | 38 | 69 | 109 | 146 | 192 | ja | ja |
| 2 | 10 | 45 | 84 | 123 | 153 | 210 | ja | ja |
| 3 | 14 | 60 | 114 | 160 | 204 | 255 | ja | ja |
| Maximalwert | 14 | 60 | 114 | 160 | 204 | 255 | | |
| Mittelwert | 12 | 48 | 89 | 131 | 168 | 219 | | |

Darüber hinaus wurde die Brennbarkeit von jeweils fünf Proben bei einer Beflammungszeit von 12 s (Vertikaltests) gemäß ABD 0031 und FAR 25.853 b(4) ermittelt, wobei bei den fünf Proben Nachbrennzeiten ermittelt wurden, die in der Größenordnung der Nachbrennzeiten des erfindungsgemäßen Werkstoffes gemäß dem obigen Ausführungsbeispiel liegen und den vorgenannten Normen ebenfalls genügen.

Toxizitätstests an jeweils 3 Proben gemäß ABD 0031 anhand der Parameter Blausäure (HCN), Kohlenmonoxid (CO), Stickoxide (NO und NO₂), Schwefelverbindungen (SO₂ und H₂S), Fluorwasserstoff (HF) und Chlorwasserstoff (HCl) ergaben in diesem Fall Mittelwerte von (1) "non flaming (F)": 0 ppm (SO₂ und H₂S; HF; HCl), 1 ppm (NO und NO₂), 2 ppm (HCN) sowie 10 ppm (CO); bzw. (2) "non flaming (NF)": 0 ppm (SO₂ und H₂S; HF; HCl), 2 ppm (HCN); 20 ppm (NO und NO₂) sowie 100 ppm (CO), was den Anforderungen an die genannten Norm ebenfalls problemlos genügt.

### Fazit:

Während sowohl der erfindungsgemäße Werkstoff auf TPU-Basis als auch der herkömmliche Werkstoff auf PUR-Basis den Anforderungen an die Brennbarkeit sowie an die Toxizität problemlos erfüllen, zeichnet sich der erfindungsgemäße TPU-Werkstoff durch eine außerordentlich geringe Rauchgasentwicklung aus, so daß er nicht nur den Erfordernissen gemäß den für den Luftverkehr geltenden Normen ABD 0031 und FAR 25.853 (d) (optische Dichte Ds < 200 nach 4 min) sowohl unter Luftabschluß ("non flaming (NF)") als auch unter Atmosphärenbedingungen ("flaming (F)") mehr als genügt, sondern auch noch nach mehr als 6 min eine derart geringe Rauchgasentwicklung zeigt ("NF" und "F"), daß die optische Dichte Ds immer noch deutlich unter 200 liegt. Demgegenüber entwickelt der herkömmliche PUR-Werkstoff unter Luftabschluß ("non flaming (NF)") deutlich zu viel Rauchgas, um den vorgenannten Normen zu genügen, wobei die Rauchgasentwicklung etwa um den Faktor 8 größer ist als bei dem erfindungsgemäßen TPU-Werkstoff. Unter Atmosphärenbedingungen erfüllt der herkömmliche PUR-Werkstoff die Normen zwar gerade noch, doch übertrifft seine Rauchgasentwicklung die des erfindungsgemäßen TPU-Werkstoffes auch unter Atmosphärenbedingungen um ein Vielfaches, nämlich etwa um den Faktor 3 bis 4.

Der erfindungsgemäße Polymer-Werkstoff gewährleistet folglich eine gegenüber bekannten Werkstoffen erheblich höhere Sicherheit im Brandfall, da die deutlich geringere Rauchentwicklung auch nach verhältnismäßig langen Abbrandzeiten von mehr als 6 min sowohl die Erstickungsgefahr als auch die Gefahr einer Orientierungslosigkeit infolge schlechter Sichtverhältnisse von Menschen, die sich vor dem Brand in Sicherheit bringen müssen, drastisch reduziert.

## Patentansprüche

1. Flammfester Werkstoff mit einer mit wenigstens einem Flammschutzmittel in Form von Ammoniumpolyphosphat und/oder rotem Phosphor versetzten Polymermatrix, wobei die Polymermatrix des Werkstoffes überwiegend aus einem thermoplastischen Polyurethan auf der Basis von aromatischen Polyestern gebildet ist.

2. Werkstoff nach Anspruch 1, **dadurch gekennzeichnet, daß** der Anteil des thermoplastischen Polyurethans auf der Basis von aromatischen Polyestern wenigstens 80 Mass.-%, insbesondere wenigstens 90 Mass.-%, vorzugsweise wenigstens 95 Mass.-%, bezogen auf die gesamte Polymermatrix des Werkstoffes beträgt.

3. Werkstoff nach Anspruch 1 oder 2, **dadurch gekennzeichnet, daß** das thermoplastische Polyurethan auf der Basis von aromatischen Polyestern von einem sowohl spritzgießbaren als auch extrudierbaren thermoplastischen Polyurethan gebildet ist.

4. Werkstoff nach einem der Ansprüche 1 bis 3, **dadurch gekennzeichnet, daß** das thermoplastische Polyurethan auf der Basis von aromatischen Polyestern ein unter dem Handelsnamen "Texin^{®}", insbesondere "Texin^{®} 285", der *Bayer AG* erhältliches thermoplastisches Polyurethan ist.

5. Werkstoff nach einem der Ansprüche 1 bis 4, **dadurch gekennzeichnet, daß** er zwischen 10 und 30 Mass.-%, insbesondere zwischen 15 und 25 Mass.-%, des Flammschutzmittels, bezogen auf den gesamten Werkstoff, enthält.

6. Werkstoff nach einem der Ansprüche 1 bis 5, **dadurch gekennzeichnet, daß** das Flammschutzmittel aus der Gruppe der unter dem Handelsnamen "Exolit^{®}", insbesondere "Exolit^{®} AP" und/oder "Exolit^{®} RP", erhältlichen Flammschutzmittel der *Clariant AG* ausgewählt ist.

7. Flammfestes Polymer-Formteil, **dadurch gekennzeichnet, daß** es einen Werkstoff gemäß einem der Ansprüche 1 bis 6 enthält oder im wesentlichen gänzlich hieraus besteht.

8. Polymer-Formteil nach Anspruch 7, **dadurch gekennzeichnet, daß** es einen, insbesondere im wesentlichen sandwichartigen, mehrschichtigen Aufbau aufweist, wobei wenigstens eine der Schichten von einem Werkstoff gemäß einem der Ansprüche 1 bis 6 gebildet ist.

9. Polymer-Formteil nach Anspruch 7 oder 8, **dadurch gekennzeichnet, daß** es ein Innenverkleidungsteil für Flugzeuge und/oder Kraftfahrzeuge ist.

10. Verfahren zur Herstellung eines Polymer-Formteils nach einem der Ansprüche 7 bis 9, **dadurch gekennzeichnet, daß** ein Werkstoff gemäß einem der Ansprüche 1 bis 6 plastifiziert und mittels bekannter thermoplastischer Verarbeitungsverfahren, insbesondere Extrudieren oder Spritzgießen, zu dem Formteil geformt wird.

## Claims

1. A flame-proof material with a polymer matrix mixed with a flame retardant in the form of ammonium polyphosphate and/or red phosphorus, wherein the polymer matrix of the material is formed primarily from a thermoplastic polyurethane based on aromatic polyesters.

2. The material according to Claim 1, **characterised in that** the proportion of the thermoplastic polyurethane based on aromatic polyesters is at least 80% by mass, in particular at least 90% by mass and preferably at least 95% by mass related to the entire polymer matrix of the material.

3. The material according to Claim 1 or 2, **characterised in that** the thermoplastic polyurethane based on aromatic polyesters is formed from both an injection mouldable and extrudable thermoplastic polyurethane.

4. The material according to any one of Claims 1 to 3, **characterised in that** the thermoplastic polyurethane based on aromatic polyesters is a thermoplastic polyurethane obtainable from Bayer AG under the commercial name "Texin®", in particular "Texin® 285".

5. The material according to any one of Claims 1 to 4, **characterised in that** it contains between 10 and 30% by mass, in particular between 15 and 25% by mass of the flame retardant.

6. The material according to any one of Claims 1 to 5, **characterised in that** the flame retardant is selected from the group of flame retardants from Clariant AG available under the commercial name "Exolit®", in particular "Exolit® AP" and/or "Exolit® RP".

7. A flame-proof polymer moulding, **characterised in that** it contains a material according to any one of Claims 1 to 6 or essentially consists entirely of it.

8. The polymer moulding according to Claim 7, **characterised in that** it has a multi-layer structure that is essentially sandwich-like.

9. The polymer moulding according to Claim 7 or 8, **characterised in that** it is an interior trim panel for aircraft and/or motor vehicles.

10. A method for manufacturing a polymer moulding according to any one of Claims 7 to 9, **characterised in that** a material according to any one of Claims 1 to 6 is plasticised and formed into the moulding by means of thermoplastic processing methods of prior art, in particular extrusion or injection moulding.

## Revendications

1. Matière active ignifuge pourvue d'au moins un agent ignifuge sous la forme de polyphosphate d'ammonium et/ou de phosphore rouge à matrice polymère décalée, la matrice polymère de la matière active étant constituée en majorité d'un polyuréthane thermoplastique réalisé sur la base de polyesters aromatiques.

2. Matière active selon la revendication 1, **caractérisée en ce que** la teneur en polyuréthane thermoplastique réalisé sur la base de polyesters aromatiques représente au moins 80 % en masse, notamment au moins 90 % en masse, de préférence au moins 95 % en masse de la totalité de la matrice polymère de matière active.

3. Matière active selon la revendication 1 ou 2, **caractérisée en ce que** le polyuréthane thermoplastique réalisé sur la base de polyesters aromatiques est constitué d'un polyuréthane thermoplastique pouvant au choix être moulé par injection ou extrudé.

4. Matière active selon l'une quelconque des revendications 1 à 3, **caractérisée en ce que** le polyuréthane thermoplastique réalisé sur la base de polyesters aromatiques est un polyuréthane thermoplastique pouvant existant sous le nom commercial «Texin^{®}», notamment « Texin^{®}285 » de la société Bayer AG.

5. Matière active selon l'une quelconque des revendications 1 à 4, **caractérisée en ce qu'**elle contient entre 10 et 30 % en masse, notamment entre 15 et 25 % en masse, d'agent ignifuge par rapport à la totalité de la matière active.

6. Matière active selon l'une quelconque des revendications 1 à 5, **caractérisée en ce que** l'agent ignifuge est sélectionné dans le groupe d'agents ignifuges de la société Clariant AG commercialisés sous le nom commercial « Exolit^{®} », notamment « Exolit^{®} AP » et/ou « Exolit^{®} RP ».

7. Pièce moulée de polymère ignifuge, **caractérisée en ce qu'**elle contient une matière active selon l'une quelconque des revendications 1 à 6 ou se compose pour l'essentiel intégralement de celle-ci.

8. Pièce moulée de polymère selon la revendication 7, **caractérisée en ce qu'**elle comporte une structure à plusieurs couches, notamment pour l'essentiel en sandwich, au moins une des couches étant constituée d'une matière active selon l'une quelconque des revendications 1 à 6.

9. Pièce moulée de polymère selon la revendication 7 ou 8, **caractérisée en ce qu'**elle correspond à une pièce de revêtement intérieur d'avions et/ou de véhicules automobiles.

10. Procédé de fabrication d'une pièce moulée de polymère selon l'une quelconque des revendications 7 à 9, **caractérisé en ce qu'**une matière active selon l'une quelconque des revendications 1 à 6 est plastifiée et mise en moule pour former une pièce moulée à l'aide d'un procédé de traitement thermoplastique connu, notamment par extrusion ou moulage par injection.
